# EUROPEAN PATENT SPECIFICATION

(11) **EP 0 509 607 B1**
(45) Date of publication and mention of the grant of the patent: **03.04.1996**
(21) Application number: 92201088.9
(22) Date of filing: 16.04.1992
(51) Int. Cl.: B28B 19/00, C04B 18/20

(54) **Method of forming a substantially solid article using a stock mixture comprising ground plastic material, in particular waste material**
Verfahren zur Herstellung eines wesentlichen festen Gegenstandes unter Verwendung einer gemahlenen Kunststoff-Material enthaltenen Zusammensetzung, insbesondere Kunststoffabfall
Procédé pour former une article essentiellement solide utilisant un mélange contenant du matériau plastique broyé, en particulier matériau de déchet

(30) Priority: 19.04.1991 NL 9100689
(43) Date of publication of application: 21.10.1992
(73) Proprietor: Spoor, Joris, NL-8604 ED Sneek (NL)
(72) Inventor: Spoor, Joris, NL-8604 ED Sneek (NL)
(74) Representative: Smulders, Theodorus A.H.J., Ir.

(56) References cited:
- DE-U- 9 007 268
- GB-A- 575 834
- US-A- 3 654 018
- CHEMICAL ABSTRACTS, vol. 86, no. 6, February 1977, Columbus, Ohio, US; abstract no. 33550H, TAJIMA OYO KAKO CO.: 'Synthetic resin-cement composite products' page 249 & JP-A-51 025 467 (TAJIMA OYO KAKO CO.) 31 July 1976
- CHEMICAL ABSTRACTS, vol. 100, no. 10, March 1984, Columbus, Ohio, US; abstract no. 73083X, T. HANDA ET AL.: 'Sand and gravel made of synthetic resins"' page 296 & JP-A-58 172 261 (T. HANDA ET AL.) 11 October 1983
- CHEMICAL ABSTRACTS, vol. 99, no. 26, December 1983, Columbus, Ohio, US; abstract no. 217629R, Y. NATSIEVSKII ET AL.: 'Gypsum-concrete mix' page 322 & SU-A-1 039 915 (Y. NATSIEVSKII ET AL.) 7 September 1983

## Description

The invention relates to a method of forming a substantially solid article using a stock mixture comprising a binder and a ground plastic material, in particular waste material, from which stock mixture with a suitable liquid an at least moist, moldable and setting mass is formed.

It is known to make solid articles from a raw material partly or wholly composed of ground plastic material, in particular waste plastic material. To that end, the plastic (waste) material is fluidized by temperature elevation and then given a shape corresponding with the desired end product, in one of the manners suitable for the purpose, for instance by extrusion or by casting in a mold. In this way, poles, boards, pallets, etc., can be made from waste plastic. An important advantage of such articles formed from waste plastic is that the plastic used for this purpose is withdrawn from the stream of waste material. Another advantage is that articles so formed can be ground again at the end of their lifetime to serve as raw material for new articles.

A drawback of the known technique is the necessary temperature elevation, which requires a relatively great deal of energy. Moreover, at elevated temperatures undesirable vapours may be formed.

These drawbacks of the known technique are not encountered if the ground plastic (waste) material is processed in cold condition. Such a technique is for instance known from GB-A-575834 and DE-U-9007268.5. Both references describe the use of plastic granulate material, preferably made from plastic waste material, as aggregate in concrete. The plastic granulate material is then used in the same manner as the conventional mineral materials such as sand and gravel, and can also be used to replace these materials at least in part. The concrete mixture so obtained can be processed in the same manner as the conventional concrete mixtures. With the concrete mixture it is possible to realize *in situ* a building construction or a part thereof but also to produce concrete elements such as tiles, slabs and the like, which are intended for later use at a different location. The articles so obtained can be used in many ways, but also have a number of limitations owing to the nature of the material and of the surface of the material. For instance, the articles made in the known ways are hard, which can be objectionable for certain applications, and crumble easily, which may also be objectionable. Also, the articles made in the known manners are not nailable.

The object of the invention is to provide a method by means of which, starting from a known stock mixture comprising ground (waste) material, a new class of articles is provided. To that end, according to the invention, a method of forming a substantially solid article using a stock mixture comprising a binder and ground plastic waste material, from which stock mixture with a suitable liquid an at least moist moldable and setting mass is formed, is characterized in that the moldable mass is cast in a mold which thereby becomes a part of the article and serves as permanent outer cover of the article, and in that the mold used is made from ground material of waste plastics

Using the method according to the invention, it is possible to make tiles, slabs, kerbstones and the like with a relatively soft and non-crumbling exterior. Using the method according to the invention, it is also possible to make articles in the form of poles and beams. Depending on the material of the mold and the exact composition of the moldable material, the articles so obtained can be nailable and even sawable.

Hereinafter the invention will be further described with reference to the accompanying drawings.
Fig. 1 is a block diagram of an example of a method of making a stock mixture according to the invention;
Fig. 2 is a schematic, partly sectional example of an article made using a stock mixture according to the invention; and
Fig. 3 is a schematic section of a second example of an article made with the stock mixture according to the invention.

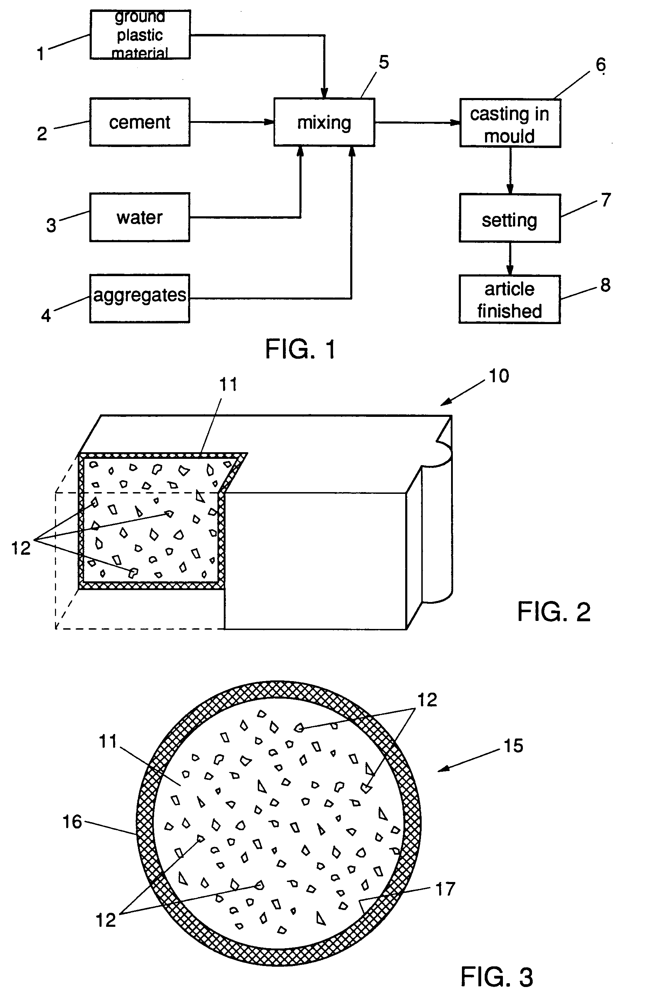

Fig. 1 schematically shows in what way a stock mixture according to the invention can be obtained and how, with the stock mixture obtained, a substantially solid article can be made. A working supply of plastic ground material is schematically indicated at 1. Preferably, the ground material has been obtained by grinding plastic waste material, but ground material that has not, or partly, been obtained from waste material, can also be used. The presence of other materials, such as paper, wood, metal, fabric particles and the like in relatively minor amounts is not disturbing. Generally, a percentage of 5-10% of other materials is permissible, but for specific uses, other values may apply. Experiments have shown that wood chippings are a suitable aggregate. Wood chippings can replace the plastic material at least in part. A supply of binder, such as cement, is shown at 2. In principle, any type of cement is useful, but other binders, such as gypsum, PUR, types of adhesives, etc., can also be considered.

A working supply of liquid, for instance water, is indicated at 3. This can be a supply of water stored in vessels or the like or in a basin, but the liquid may also be supplied from a water tap connected to a water supply system.

A working supply of aggregates, such as sand and/or one or more other materials, is indicated at 4. In principle, the use of such aggregates is not necessary, but it may in some cases be desirable.

At 5, the plastic ground material, the cement and the water are mixed in the manner conventional in the concrete industry, with or without addition of aggregates. It is observed that mixing may optionally be effected in steps. It would also be possible, for instance, first to mix a given amount of plastic ground material with an amount of cement in dry condition and then to add the water while continuing the mixing process.

A suitable mixing ratio is a ratio of equal parts by weight of plastic ground material on the one hand and cement plus water and any aggregates on the other. However, this ratio can be varied to a considerable extent, depending on the intended use of the stock mixture.

After a thick, liquid or at least moist and moldable stock mixture has been obtained in the manner described hereinabove, this mixture is cast in a suitable mold as indicated at 6. The setting process is indicated at 7 and after sufficient setting, the article formed is finished, as indicated schematically at 8.

In this manner, ground plastic material can be processed in cold condition, and using plastic ground material a variety of articles can be molded which are commonly made from concrete. Examples are kerbstones, slabs, tiles, structural elements, etc. Such articles are considerably lighter than the concrete equivalents and therefore easier to process. The mold at the same time constitutes the permanent outer cover and therefore the properties of the article obtained are determined to a considerable extent by the material of the mold rather than the molding mass itself.

Fig. 2 is a schematic, partly sectional view of a kerbstone 10 made in accordance with the invention. The section shows the plastic particles 12 incorporated in the hardened cement 11. Such kerbstones and other articles traditionally made from concrete can be made in substantially the same manner as the concrete equivalents. It is possible to start from a mixture of cement and sand, while the conventional gravel is replaced partly or wholly by ground waste plastic material. Then concrete is made from this mixture, utilizing water and a suitable mixing device such as a concrete mixer, and the concrete can be cast in molds.

According to a further eleboration of the inventive concept, an article capable of holding nails or screws can be made by using a plastic mold which is filled with a stock mixture rendered moldable with water or another suitable liquid and which mold itself again constitutes the permanent outer cover of the article.

Fig. 3, by way of example, shows a cross-section of a round pole 15 formed in this way. The outer wall of the pole 15 consists of a plastic tube 16 made in one of the manners known for the purpose. Advantageously, the tube 16 can be made from ground material which has been obtained from sorted waste plastic. The tube may for instance have a wall thickness of about 1 cm. Suitable materials for making the tube or a differently shaped mold include LDPE (low-density polyethylene), HDPE (high-density polyethylene) and polypropylene.

Advantageously, the mold can be designed with a rough inside surface 17 so as to promote proper bonding between the outer cover and the filling.

Experiments have shown that an article so formed with a plastic outer cover can hold screws and nails and can be sawn. Further, such articles are resistant to low temperatures and form-retaining. Therefore, such articles can be used in many locations where traditionally wood has been used.

It is observed that after the foregoing, various modifications will readily occur to a person of ordinary skill in the art. Thus, the stock mixture can be provided with a suitable internal reinforcement in a similar manner to the conventional manner used in the concrete industry. It is also possible to use a permanent outer cover of a material other than plastic.

It is further observed that the articles formed are substantially solid, but may have cavities and recesses.

As stated above, in principle, other liquids than water and other binders than cement can be useful as well.

## Claims

1. A method of forming a substantially solid article using a stock mixture comprising a binder and a ground waste plastic material, from which stock mixture with a suitable liquid an at least moist moldable and setting mass is formed, characterized in that the moldable mass is cast in a mold which thereby becomes a part of the article and serves as permanent outer cover of the article, and in that the mold used is made from ground material of waste plastics.

2. A method according to claim 1, characterized in that the mold used is made from ground material of sorted waste plastics.

3. A method according to claim 1 or 2, **characterized in that** a mold with a rough inside surface is used.

4. A method according to any one of the preceding claims, **characterized in that** the mass in the mold is provided with a reinforcement.

5. A method according to any one of the preceding claims, **characterized in that** aggregates are added to the stock mixture.

6. A method according to any one of claims 2-5, **characterized in that** a mold is used which is made from ground material of a substance from the group of low-density polyethylene, high-density polyethylene, and polypropylene.

7. A method according to any one of claims 1-6 **characterized in that**, as a binder, cement is used and, as a liquid, water is used.

8. A method according to any one of claims 1-7, **characterized in that** the moldable mass contains wood chippings.

9. An article formed utilizing the method according to any one of claims 1-8.

## Patentansprüche

1. Verfahren zur Herstellung eines im wesentlichen festen Gegenstandes unter Verwendung einer ein Bindemittel und gemahlenen Kunststoffabfall enthaltenden Zusammensetzung, aus der mit einer geeigneten Flüssigkeit eine mindestens feuchte, gießbare und härtbare Masse hergestellt wird, dadurch gekennzeichnet, daß die gießbare Masse in eine Form gegossen wird, die dabei Teil des Gegenstandes wird und als bleibender Außenmantel des Gegenstandes dient, und daß die verwendete Form aus Mahlgut aus Kunststoffabfällen hergestellt wird.

2. Verfahren nach Anspruch 1, dadurch gekennzeichnet, daß die verwendete Form aus Mahlgut aus sortierten Kunststoffabfällen hergestellt wird.

3. Verfahren nach Anspruch 1 oder 2, dadurch gekennzeichnet, daß eine Form mit einer rauhen Innenfläche verwendet wird.

4. Verfahren nach einem der vorhergehenden Ansprüche, dadurch gekennzeichnet, daß die Masse in der Form mit einer Verstärkung versehen wird.

5. Verfahren nach einem der vorhergehenden Ansprüche, dadurch gekennzeichnet, daß der Zusammensetzung Zuschlagstoffe zugegeben werden.

6. Verfahren nach einem der Ansprüche 2 bis 5, dadurch gekennzeichnet, daß eine Form verwendet wird, die aus Mahlgut einer Substanz aus der Gruppe Polyäthylen niedriger Dichte, Polyäthylen hoher Dichte und Polypropylen hergestellt ist.

7. Verfahren nach einem der Ansprüche 1 bis 6, dadurch gekennzeichnet, daß als Bindemittel Zement und als Flüssigkeit Wasser verwendet wird.

8. Verfahren nach einem der Ansprüche 1 bis 7, dadurch gekennzeichnet, daß die gießbare Masse Holzspäne enthält.

9. Gegenstand, hergestellt unter Anwendung des Verfahrens nach einem der Ansprüche 1 bis 8.

## Revendications

1. Une méthode de formation d'un objet essentiellement solide à partir d'un mélange comprenant un liant et un matériau plastique sous forme de déchets, mélange à partir duquel on forme avec un liquide approprié une masse qui, au moins à l'état humide, peut être moulée et fait prise, caractérisée en ce qu'on coule la masse qui peut être moulée dans un moule qui, par cette opération, devient partie intégrante de l'article et sert de couvercle extérieur permanent pour l'article, et en ce que le moule utilisé est fabriqué à partir du matériau de base des déchets de plastique.

2. Une méthode suivant la revendication 1, caractérisée en ce que le moule utilisé est fabriqué à partir du matériau de base de déchets de plastique triés.

3. Une méthode suivant la revendication 1 ou 2, caractérisée en ce qu'on emploie un moule ayant une surface interne rugueuse.

4. Une méthode suivant l'une quelconque des revendications précédentes, caractérisée en ce que la masse placée dans le moule est pourvue d'un renforcement.

5. Une méthode suivant l'une quelconque des revendications précédentes, caractérisée en ce qu'on ajoute des agrégats au mélange.

6. Une méthode suivant l'une quelconque des revendications 2-5, caractérisée en ce qu'on emploie un moule fabriqué dans un matériau de base constitué d'une substance du groupe du polyéthylène basse densité, polyéthylène haute densité et polypropylène.

7. Une méthode suivant l'une quelconque des revendications 1-6, caractérisée en ce que, comme liant, on emploie un ciment et en ce que, comme liquide, on emploie de l'eau.

8. Une méthode suivant l'une quelconque des revendications 1-7, caractérisée en ce que la masse qui peut être moulée contient des copeaux de bois.

9. Un article formé au moyen d'une méthode conforme à l'une quelconque des revendications 1-8.
